# EUROPÄISCHE PATENTANMELDUNG

(11) **EP 4 465 391 A1**
(43) Veröffentlichungstag der Anmeldung: **20.11.2024**
(21) Anmeldenummer: 23173576.2
(22) Anmeldetag: 16.05.2023
(51) Int. Cl.: H01M 8/04223, H01M 8/04664

(54) **VERFAHFREN ZUR QUALITÄTSPRÜFUNG UND NACHBEARBEITUNG EINES BRENNSTOFFZELLEN- ODER ELEKTROLYSE-STACKS**

(71) Anmelder: Sunfire GmbH, 01237 Dresden (DE); Vitesco Technologies GmbH, 93055 Regensburg (DE)
(72) Erfinder: Vandercruysse, Felix, Dr., 80339 München (DE); Surrey, Alexander, Dr., 01219 Dresden (DE); Strohbach, Thomas, 01309 Dresden (DE); Schade, Christoph, 01097 Dresden (DE); Spura, David, Dr., 01219 Dresden (DE); Ammeux, Clement, 01099 Dresden (DE); Georgi, Benjamin, 09128 Chemnitz (DE); Dietrich, Frank, 09224 Chemnitz (DE)
(74) Vertreter: Hauck Patentanwaltspartnerschaft mbB

(57) **Zusammenfassung**

Verfahren zur Qualitätsprüfung und Nachbearbeitung eines gefügten Zellen-Stacks mit einer Mehrzahl von zu einem Stapel angeordneten Membran-Elektroden-Zellen, das folgende Schritte aufweist:
• Messen mindestens einer elektrischen Kenngröße mindestens einer Membran-Elektroden-Zelle,
• Messen einer Gasdruckdichtigkeit für mindestens eine Membran-Elektroden-Zelle oder des Zellen-Stacks,
• Erkennen einer oder mehrerer defekten/r Membran-Elektroden-Zelle/n, abhängig von der gemessenen mindestens einen elektrischen Kenngröße und/oder der gemessenen Druckdichtigkeit und
• Stillsetzen der als defekt erkannten Membran-Elektroden-Zelle/n, wobei das Stillsetzen die folgenden Schritte aufweist,
die als defekt erkannte Membran-Elektroden-Zelle elektrisch kurzzuschließen oder kurzzuschließen und technisch gasdicht zu verfügen.

## Beschreibung

Die Erfindung bezieht sich auf das technische Gebiet der Elektrolyse und Brennstoffzellentechnik und betrifft ein Verfahren zur Qualitätsprüfung und Nachbearbeitung von Zellen-Stacks, wie sie beispielsweise bei Hochtemperaturelektrolyseuren (SOEC) oder auch bei der Polymer-Elektrolyt-Membran-(PEM)-Brennstoffzellentechnologie eingesetzt werden.

Unbemerkte Gaslecks in Brennstoffzellen können zu Feuer führen und so die Brennstoffzelle zerstören. Aus EP 1 444 746 ist bekannt, ein Gasleck innerhalb einer Brennstoffzelle zu lokalisieren, wobei die Brennstoffzelle mit einem Entladewiderstand in elektrischem Kontakt steht und die Zellspannung der Brennstoffzelle überwacht wird. Nachteilig an diesem Verfahren ist, dass vor der Messung mit Inertgas gespült werden muss.

Aus DE 10 2011 118 689 ist ein Verfahren zur Fehlerdiagnose in einem Brennstoffzellensystem bekannt, bei dem Druckmesswerte für verschiedene Drosselklappenstellungen miteinander verglichen werden.

Aus EP 2 195 871 B1 ist eine Brennstoffzellenbaugruppe bekannt, bei der mindestens eine Leistungserzeugungsbrennstoffzelle und eine Sensorbrennstoffzelle vorgesehen sind, wobei letztere den gleichen Aufbau wie die andere(n) Zelle(n) besitzt und ihren Brennstoff aus dem restlichen Brennstoff im Gasauslass von den anderen Zellen erhält. Anode und Kathode der Sensorzelle sind über einen Widerstand (R) miteinander verbunden, die Sensorzelle arbeitet unter den gleichen Bedienungen wie die übrigen Zellen, so dass eine Änderung in den Arbeitsbedingungen der übrigen Zellen an der Sensorzelle als eine Spannungsänderung erfasst werden kann.

Aus US 6 764 782 B2 ist ein elektrisches Isolationssystem für einen Brennstoffzellenstapel sowie ein Verfahren zum Betrieb des Brennstoffzellenstapels bekannt. Der Stapel umfasst eine Vielzahl von Brennstoffzellen, die in Reihe geschaltet sind, und einen Kühlmittelkreislauf zur Kühlung der Brennstoffzellen im Betrieb unter Verwendung eines flüssigen Kühlmittels mit eingeschränkter elektrischer Leitfähigkeit. Der Kühlmittelkreislauf umfasst mehrere leitende Komponenten wie eine äußere Begrenzungswand des Brennstoffzellenstapels, einen Kühler und/oder eine Pumpe, von denen mindestens eine über eine Verbindung mit einem Chassis geerdet ist. Es ist eine Messschaltung zur Messung des Widerstands zwischen einer ausgewählten Brennstoffzelle und der Erdung vorgesehen, und eine Überwachungsschaltung reagiert, wenn der Widerstand einen kritischen Wert erreicht.

Aus EP 0 492 551 B1 ist ein Überbrückungsschalter zum elektrischen Überbrücken einer monopolaren Elektrolysevorrichtung bekannt, die aus einzelnen Elektrolysezellen mit anodischen und kathodischen Anschlussstellen besteht. Der Überbrückungsschalter weist eine Vielzahl erster und zweiter Verlängerungsarme auf, die zur Verbindung mit der kathodischen und anodischen Anschlussstelle jeder einzelnen Zelle geeignet ist. Mit der Überbrückungsschaltung erfolgt eine gleichmäßige Verringerung des Stromflusses in den einzelnen Zellen der zu überbrückenden Elektrolysevorrichtung, ohne dass es zu einer Wanderung des elektrischen Stroms in die benachbarten Zellen kommt.

Aus EP 2 515 369 B 1 ist ein Brennstoffzellensystem bekannt, das basierend auf einer gemessenen Temperatur einen Kurzschlussbereich überwacht, wobei eine Steuerung vorgesehen ist, die die Brennstoffzelle ansteuert, damit die Temperatur innerhalb eines vorbestimmten Bereichs liegt.

Aus US 8 642 220 ist ein Verfahren zur Bestimmung eines Strom-Sollwerts für einen Brennstoffzellenstack bekannt, bei dem eine Spannung an der Brennstoffzelle abhängig von einem Widerstandswert an der Zelle geschätzt und abhängig von dem Schätzwert eine Änderung des Stromwerts festgelegt wird.

Zellen-Stacks für Brennstoffzellen oder Elektrolyse-Anwendungen bestehen üblicherweise mindestens aus gestapelt angeordneten Membran-Elektroden-Einheiten (*membran-electrode-assembly* = MEA) mit jeweils dazwischen angeordneten Interkonnektoren oder Bipolarplatten. Jede MEA-Einheit mit den angrenzenden Interkonnektorplatten oder Bipolarplatten bildet dabei jeweils eine einzelne Zelle. Dies kann eine Elektrolysezelle oder eine Brennstoffzelle sein. Eine Zelle wird im Rahmen dieser Anmeldung auch als Membran-Elektroden-Zelle (nachfolgend im Rahmen dieser Erfindung kurz MEA-Zelle genannt) bezeichnet. Stacks sowohl für Elektrolyse- als auch für mobile Brennstoffzellenanwendungen können dabei mehrere hundert einzelne Zellen umfassen. Im Rahmen dieser Anmeldung wird der Begriff Interkonnektoren auch für Bipolarplatten verwendet.

Bei der Herstellung solcher Stacks werden die Membran-Elektroden-Einheiten abwechselnd mit den Interkonnektoren gestapelt angeordnet und gefügt. Der Fügevorgang erfolgt in der Regel unter Aufbringung einer mechanischen Fügespannung, welche die Zellen aufeinanderpresst.

Derzeit werden gefügte Festoxidzellen-Stacks (SOC-Stacks), die für SOEC-Anlagen geeignet sind, schon beim Defekt einer einzigen Membran-Elektroden-Einheit als insgesamt defekt bewertet, selbst wenn mehrere hundert Ebenen in dem Stack intakt sind. Ein gefügter SOC-Stack muss dauerhaft unter einer mechanischen Spannung gehalten werden und ist nicht mehr lösbar, so dass ein Austausch oder Entfernen der defekten Membran-Elektroden-Zelle(n) nicht möglich ist.

Wenn bereits eine Membran-Elektroden-Zelle defekt ist, sinkt die Leistung des gesamten Stacks. Die erhöhte Temperatur eines betriebenen, defekten Stacks sorgt für eine Erhöhung der Temperatur der an der defekten Zelle angrenzenden Zellen, die in der Folge schneller degradieren. So entsteht eine Art doppelter Dominoeffekt von einer defekten Zelle ausgehend, der die jeweils benachbarten Zellen in der Leistung beeinträchtigt bis zur Zerstörung der benachbarten Zellen.

Der vorliegenden Erfindung liegt die Aufgabe zu Grunde, ein Verfahren bereitzustellen, das eine Qualitätsprüfung und ein Nachbearbeiten eines Zellen-Stacks mit einfachen Mitteln gestattet.

Die Aufgabe wird durch die in den Ansprüchen angegebene Erfindung gelöst. Vorteilhafte Ausgestaltungen sind Gegenstand der Unteransprüche, wobei die Erfindung auch Kombinationen der einzelnen Ansprüche im Sinne einer Und-Verknüpfung miteinschließt, solange sie sich nicht gegenseitig ausschließen.

Das erfindungsgemäße Verfahren dient zur Qualitätsprüfung und Nachbearbeitung eines Zellen-Stacks. Die Nachbearbeitung betrifft dabei sowohl neu hergestellte Zellen-Stacks als auch ein Wiederaufarbeiten von älteren Zellen-Stacks.

Gemäß dem erfindungsgemäßen Verfahren zur Qualitätsprüfung und Nachbearbeitung eines gefügten Zellen-Stacks wird mindestens eine elektrische Kenngröße für jeweils einzelne der Membran-Elektroden-Zellen im Stack gemessen. Dies erfolgt vorzugsweise während und/oder nach dem Fügevorgang. Das Messen der elektrischen Kenngröße kann beispielsweise für jede Membran-Elektroden-Zelle im Stapel oder in gewissen Abständen, beispielsweise für jede fünfte Membran-Elektroden-Zelle oder jeweils für fünf Membran-Elektroden-Zellen gemeinsam in Stapelrichtung, erfolgen.

Beim Messen der elektrischen Kenngröße sollte vorzugsweise die thermische Aktivierungstemperatur des Materials der Membran-Elektroden-Zelle berücksichtigt werden. Ist ein Halbleitermaterial eingesetzt, so ist eine Temperatur zu wählen, bei der das Material leitfähig ist, um die elektrische Kenngröße sinnvoll zu messen.

Das Messen der elektrischen Kenngröße erfolgt vorzugsweise unter vorgegebenen Testbedingungen. Ein gefügter Festoxidzellen-Stack mit einer Vielzahl von Membran-Elektroden-Zellen, wird beispielsweise vorteilhafterweise in einem Temperaturbereich von 600 °C bis 1000 °C, geprüft.

Ebenfalls erfolgt (nach der Beendigung des Fügens) das Messen einer Druckdichtigkeit der Membran-Elektroden-Zellen. Auch dieses Messen kann vorzugsweise bei den vorgegebenen Testbedingungen stattfinden. Anhand der Daten dieser Messungen erfolgt eine Einschätzung, welche konkrete(n) Membran-Elektroden-Zelle(n) als defekt erkannt und eingestuft wird/werden. Die Erkennung erfolgt dabei abhängig von der gemessenen, mindestens einen elektrischen Kenngröße und der gemessenen Druckdichtigkeit. Erfindungsgemäß ist vorgesehen, Membran-Elektroden-Zellen, die als defekt erkannt wurden, stillzusetzen. Das Stillsetzen einer oder mehrerer Membran-Elektroden-Zellen weist dabei die Schritte auf, die Membran-Elektroden-Zelle elektrisch kurzzuschließen und optional technisch gasdicht zu verfügen. Als "technisch gasdicht" wird dabei eine Leckrate von weniger als ein Normliter pro Minute (1 NL/min) betrachtet.

Nach dem erfindungsgemäßen Vorgehen ist es möglich, den Zellen-Stack weiter zu benutzen, auch wenn eine oder mehrere Membran-Elektroden-Zelle(n) nicht ordnungsgemäß arbeiten und defekt sind. Das elektrische Kurzschließen einer als defekt erkannten Membran-Elektroden-Zelle erfolgt, indem eine elektrisch leitende Verbindung zwischen den an die Membran-Elektroden-Einheit der Zelle in Stapelrichtung angrenzenden Interkonnektoren hergestellt wird und so die zwischen diesen Interkonnektoren angeordnete Membran-Elektroden-Einheit deaktiviert wird. Das Messen der mindestens einen elektrischen Kenngröße für die Membran-Elektroden-Zellen erfolgt bevorzugt, wenn der Zellen-Stack bereits mit einem Prozessgas beaufschlagt wird.

In einer bevorzugten Ausgestaltung wird als elektrische Kenngröße ein elektrischer Innenwiderstand der Membran-Elektroden-Zelle gemessen. Der elektrische Innenwiderstand (ASR) wird bevorzugt mit einer elektrochemischen Impedanzspektroskopie gemessen. Die elektrochemische Impedanzspektroskopie (EIS) bestimmt eine Impedanz für die Membran-Elektroden-Zelle als Funktion der Frequenz einer Wechselspannung bzw. eines Wechselstroms. Für die Impedanzspektroskopie wird beispielsweise eine Wechselspannung an der Membran-Elektroden-Zelle angelegt und die entsprechende Impedanz gemessen.

Neben der elektrochemischen Impedanzspektroskopie kann auch eine-U-I-Kennlinie an der Membran-Elektroden-Zelle angefahren werden. Ebenfalls ist es möglich, einen vorbestimmten Betriebspunkt mit einer definierten Stromstärke anzufahren und den Innenwiderstand entsprechend zu messen.

In einer bevorzugten Ausgestaltung wird die Fügespannung an dem Zellen-Stack während des Fügevorgangs erhöht und nach einem Abkühlen des Zellen-Stacks aufrechterhalten. Initial beginnt die Fügespannung bei Werten von mehr als 100 N und wird während des Fügevorgangs gemeinsam mit der Temperatur erhöht.

Das Messen der Dichtigkeit in dem Zellen-Stack erfolgt bevorzugt mit einer elektrochemischen Dichtheitsprüfung, bei der die zu vermessende Membran-Elektroden-Einheit kurzzeitig mit einem reduzierenden Gas beaufschlagt und jeweils ein Spannungsabfall über die Zeit gemessen wird. Der gemessene Spannungsabfall wird zur Erkennung einer Undichtigkeit mit einem vorbestimmten Referenzspannungsabfall verglichen.

Die Messung der Gasdichtigkeit erfolgt beispielsweise auch mithilfe eines Leckage-Suchsprays oder über eine Blasenbildung an dem Zellen-Stack. Eine weitere Möglichkeit, Leckagen zu erkennen, besteht darin, eine Leerlaufspannung mit einem Testgas auf der Brenngasseite zu erzeugen und danach den Gasfluss zu stoppen. Danach kann der Leerlaufspannungsabfall über der Zeit gemessen und so Rückschlüsse auf eine etwaige Undichtigkeit gezogen werden.

In einer bevorzugten Ausgestaltung erfolgt das Stillsetzen von einer als defekt erkannten Membran-Elektroden-Einheit in einem abgekühlten Zustand des Stacks. Allgemein kann das Stillsetzen vorzugsweise nach einem Abklingen der Testbedingungen erfolgen. Das Stillsetzen erfolgt vorzugsweise in einer schweißfähigen Atmosphäre.

Für das Kurzschließen einer als defekt erkannten Membran-Elektroden-Zelle wird bevorzugt eine Brücke an den zwei an die Membran-Elektroden-Einheit angrenzenden Interkonnektor- bzw. Bipolarplatten angebracht, die diese Platten elektrisch leitend verbindet, um diese so kurzzuschließen und elektrisch zu überbrücken. Diese Brücke ist vorzugsweise stabil bei den Betriebsbedingungen des Stacks, also insbesondere beständig gegen Druck-, Temperatur- und Zugspannung. Für SOEC-Anwendungen ist die Brücke insbesondere vorzugsweise hochtemperaturbeständig.

In einer bevorzugten Ausgestaltung kann die Brücke, mit der die als defekt erkannte Membran-Elektroden-Einheit kurzgeschlossen wird, auch dafür eingesetzt werden, die Membran-Elektroden-Einheit nicht nur elektrisch kurzzuschließen, sondern auch gasdicht abzuschließen.

In einer bevorzugten Ausgestaltung wird die als defekt erkannte Membran-Elektroden-Einheit durch ein Laserauftragsschweißen unter Verwendung eines Schweißpulvers und/oder einer Schweißpaste gasdicht verschweißt.

Gemäß einer weiteren bevorzugten Ausführungsvariante wird für das Anbringen der Brücke eine die Brücke aufnehmende Nut eingefräst wird. Die Nut erstreckt sich beispielsweise der Länge nach zumindest teilweise umlaufend um den Stapel und in ihrer Breite über die gesamte Dicke der kurzzuschließenden Membran-Elektroden-Einheit sowie jeweils anteilig der Dicke der angrenzenden Interkonnektor- bzw. Bipolarplatten.

Das erfindungsgemäße Verfahren zur Qualitätsprüfung und Nachbearbeitung eines Zellen-Stacks ist nicht nur während des Fügens oder im Anschluss an das Fügen eines Stacks einsetzbar. Es ist ebenfalls dafür geeignet, einen bereits verwendeten und ausgemusterten Stack zu recyclen, indem er durch das erfindungsgemäße Verfahren geprüft, aufbereitet und wieder funktionsfähig oder zumindest der Wirkungsgrad erhöht wird.

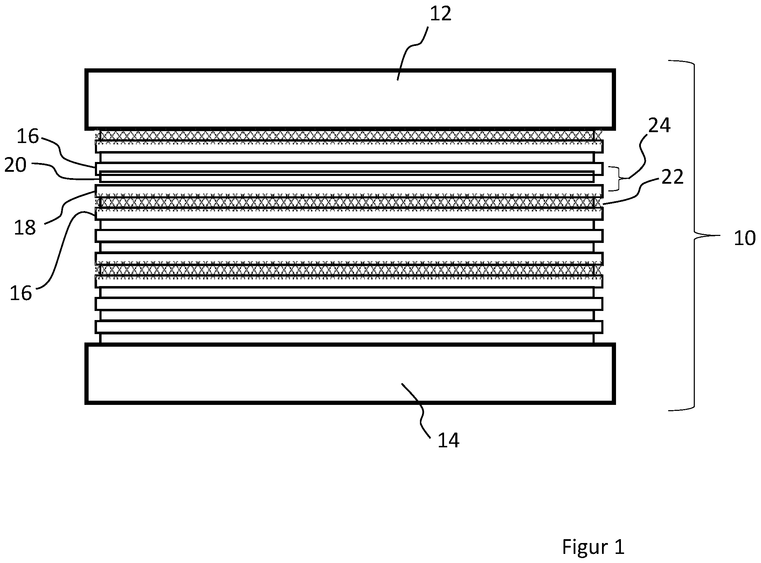

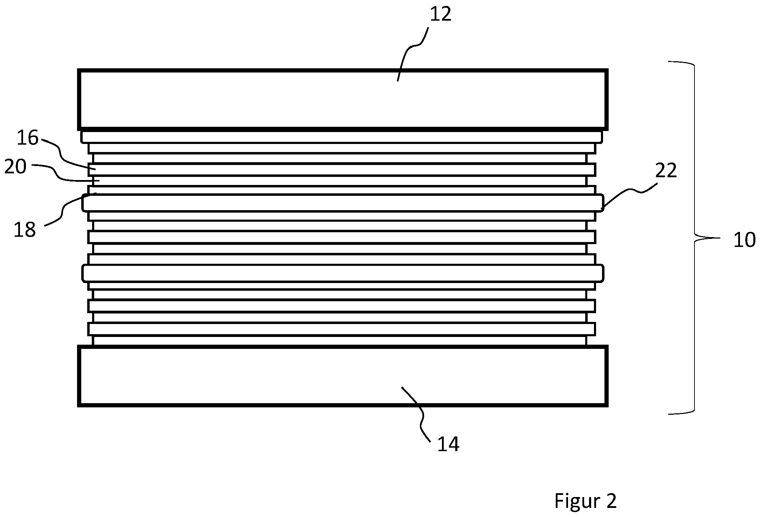

Eine bevorzugte Ausgestaltung der Erfindung wird nachfolgend beispielhaft anhand den Figuren 1 und 2 erläutert. Diese zeigen schematisch einen SOEC-Zellen-Stack, an dem das erfindungsgemäße Verfahren durchführbar ist. Die beschriebenen Verfahrensschritte können jedoch auch getrennt voneinander bzw. in anderen Kombinationen auf andere Zellen-Stacks (z.B. PEM-Stacks) angewendet werden.

Damit die Figur lesbar bleibt, ist ein Stack mit nur wenigen Ebenen dargestellt. Der Zellen-Stack 10 besitzt eine Deckplatte 12 und eine Grundplatte 14. Über die Platten 12, 14 wird eine senkrecht zu den Platten stehende Fügekraft aufgebaut, mit der die Membran-Elektroden-Einheit 20 zwischen den Interkonnektorplatten bzw. Bipolarplatten 16, 18 zusammengedrückt werden. Eine Membran-Elektroden-Einheit 20 bildet jeweils zusammen mit den angrenzenden Interkonnektorplatten 16, 18 eine Membran-Elektroden-Zelle 24.

Der gefügte Stack wird in einem Temperaturbereich von 600 °C bis 1000 °C über für Spannungsabgriffe vorgesehene Spannungsmessstellen an dem Stack kontaktiert, dies kann direkt nach dem Fügen erfolgen. Beispielsweise kann bei einem Stack mit 900 Ebenen eine Messeinrichtung schwenkbar an dem Stack herangebracht werden. Es erfolgt eine Messung des Innenwiderstands (ASR), beispielsweise mittels elektrochemischer Impedanzspektroskopie. Alternativ ist es auch möglich, über eine Spannungsstromkennlinie oder über das Anfahren eines Betriebspunkts bei festgesetzter Stromstärke beispielsweise von 0 bis 5 A/cm² und die Messung der zugehörigen Zellspannung den elektrischen Widerstand zu messen.

Die Messung der Gas(druck)dichtigkeit erfolgt vorteilhafterweise über eine elektrochemische Dichtheitsprüfung (ECDP), bei der beispielsweise ein reduzierendes Gas kurzzeitig zugegeben wird. Der Spannungsabfall an den Zellen wird gemessen, bei einem Leck kann ein schnellerer Spannungsabfall gemessen werden. Alternativ oder zusätzlich ist es auch möglich, den Festoxidzellen-Stack mithilfe eines Leckage-Suchsprays, einem Gasdetektor/Gasschnüffler oder einer Blasenbildung in einem Medium zu untersuchen.

Eine weitere Möglichkeit zur Feststellung einer Leckage besteht darin, eine Leerlaufspannung für eine Membran-Elektroden-Einheit zu erzeugen, indem beispielsweise ein Testgas auf der Brenngasseite mit einem vorbestimmten O₂-Partialdruck angelegt wird. Danach wird der Gasfluss gestoppt und der Abfall der Leerlaufspannung wird über der Zeit beurteilt. Abschließend erfolgt eine Bewertung anhand des Innenwiderstands und der Leckage, ob die Membran-Elektroden-Einheit funktionstüchtig ist oder ob sie als defekt eingestuft werden muss.

Nach dem Abkühlen werden bei einer defekten Membran-Elektroden-Einheit über eine umlaufende Brücke 22 zwei Interkonnektorplatten elektrisch leitfähig miteinander verbunden, wie in Figur 1 dargestellt. Die Brücke 22 besteht aus einem hochtemperaturbeständigen, elektrisch leitfähigen und Schweiß- oder lötbarem Material. Bevorzugt ist dabei die Brücke gasdicht ausgebildet, sodass die Zelle kurzgeschlossen und zugleich technisch gasdicht abgedichtet wird, wie in Figur 2 dargestellt.

Neben dem Aufschweißen einer Brücke besteht auch die Möglichkeit, über ein Laserauftragsschweißen mittels einer Schweißpaste und/oder einem Schweißpulver gasdicht zwei angrenzende Interkonnektorplatten miteinander zu verschweißen. Für den Betrieb eines solchen Festoxidzellen-Stacks (SOC-Stacks) ist es erforderlich, dass die Brücke 22 eine Stromtragfähigkeit von mehr als 50 A bei Betriebstemperatur besitzt. Dies erfordert, dass die Brücke 22 gut elektrisch leitend kontaktiert ist. Nachdem eine oder mehrere Brücken 22 an dem Stack erzeugt wurden, erfolgt erneut eine Messung der Zellspannungen und anschließend optional eine Dichtigkeitsprüfung. Auf diese Weise kann sichergestellt werden, dass der Stack einwandfrei arbeitet. Die Dichtigkeitsprüfung findet bevorzugt im abgekühlten Zustand statt. Als abgekühlter Zustand wird im Fall von SOC-Stacks beispielsweise ein Temperaturbereich betrachtet, der unter 600 °C liegt.

Für das Aufbringen der Brücke 22 kann außerdem vorgesehen sein, eine Nut einzufräsen, in die ein zu verschweißendes Stahlband eingelegt wird. Das Stahlband kann beispielsweise eine Breite von 0,5 bis 2 mm und eine Dicke von 0,1 bis 0,5 mm besitzen. Das Stahlband wird in die gefräste Nut eingelegt und dann zur Herstellung der Brücke verschweißt.

## Patentansprüche

1. Verfahren zur Qualitätsprüfung und Nachbearbeitung eines gefügten Zellen-Stacks (10) mit einer Mehrzahl von zu einem Stapel angeordneten Membran-Elektroden-Zellen (24), das folgende Schritte aufweist:
• Messen mindestens einer elektrischen Kenngröße mindestens einer Membran-Elektroden-Zelle (24),
• Messen einer Gasdruckdichtigkeit für mindestens eine Membran-Elektroden-Zelle (24) oder des Zellen-Stacks,
• Erkennen einer oder mehrerer defekten/r Membran-Elektroden-Zelle/n (24), abhängig von der gemessenen mindestens einen elektrischen Kenngröße und/oder der gemessenen Druckdichtigkeit und
• Stillsetzen der als defekt erkannten Membran-Elektroden-Zelle/n (24), wobei das Stillsetzen die folgenden Schritte aufweist, die als defekt erkannte Membran-Elektroden-Zelle (24) elektrisch kurzzuschließen oder kurzzuschließen und technisch gasdicht zu verfügen.

2. Verfahren nach Anspruch 1, **dadurch gekennzeichnet, dass** das Messen mindestens einer elektrischen Kenngröße mindestens einer Membran-Elektroden-Zelle (24) unter vorgegebenen Testbedingungen, insbesondere in einem Temperaturbereich von 600°C bis 1000°C erfolgt.

3. Verfahren nach Anspruch 1, **dadurch gekennzeichnet, dass** die Messung der Membran -Elektroden-Zelle (24) jeweils einzeln erfolgt.

4. Verfahren nach Anspruch 1, **dadurch gekennzeichnet, dass** als elektrische Kenngröße ein elektrischer Innenwiderstand der Membran-Elektroden-Zelle (24) gemessen wird.

5. Verfahren nach Anspruch 4, **dadurch gekennzeichnet, dass** der elektrische Innenwiderstand nach mindestens einem der folgenden Verfahren gemessen wird: mittels einer elektrochemischen Impedanzspektroskopie, über eine U-I-Kennlinie und über ein Anfahren eines vorbestimmten Betriebspunktes mit einer definierten Stromstärke.

6. Verfahren nach einen der Ansprüche 1 bis **Fehler! Verweisquelle konnte nicht gefunden werden., dadurch gekennzeichnet, dass** das Messen der Dichtigkeit mit einer elektrochemischen Dichtheitsprüfung erfolgt, bei der die messende Membran-Elektroden-Zelle (24) kurzzeitig mit einem reduzierenden Gas beaufschlagt und jeweils ein Spannungsabfall über der Zeit gemessen wird, wobei der gemessene Spannungsabfall mit einem vorbestimmten Referenzspannungsabfall verglichen wird, um eine Undichtigkeit zu erkennen.

7. Verfahren nach einem der Ansprüche 1 bis 6, **dadurch gekennzeichnet, dass** das Stillsetzen von einer als defekt erkannten Membran-Elektroden-Zellen (24) nach einem Abklingen der Testbedingungen, insbesondere in einem abgekühlten Zustand erfolgt.

8. Verfahren nach einem der Ansprüche 1 bis 7, **dadurch gekennzeichnet, dass** das Kurzschließen einer als defekt erkannten Membran-Elektroden-Zelle (24) erfolgt, indem eine Brücke (22) an die zwei an die Membran-Elektroden-Einheit (20) angrenzenden Interkonnektorplatten (16, 18) angebracht wird, welche die beiden Interkonnektorplatten (16, 18) elektrisch leitend verbindet.

9. Verfahren nach Anspruch 8, **dadurch gekennzeichnet, dass** die Brücke (22) die als defekt erkannte Membran-Elektroden-Zelle (24) technisch gasdicht abschließt.

10. Verfahren nach einem der Ansprüche 1 bis 10, **dadurch gekennzeichnet, dass** die als defekt erkannte Membran-Elektroden-Zelle (24) durch ein Laserauftragsschweißen unter Verwendung eines Schweißpulvers, eines Metallstreifens und/oder einer Schweißpaste technisch gasdicht verschweißt wird.

11. Verfahren nach einem der Ansprüche 5 bis 10, **dadurch gekennzeichnet, dass** als elektrische Kenngröße eine elektrische Spannung jeweils an einem Abgriff an einer Membran-Elektroden-Zelle (24) gemessen wird.

12. Verfahren nach einem der Ansprüche 1 bis 11, **dadurch gekennzeichnet, dass** nach Stillsetzen der defekten Membran-Elektrolyt-Zelle (24) ein Messen der Druckdichtigkeit des Zellen-Stacks (10) unter den vorgegebenen Testbedingungen und nach Abklingen der Testbedingungen durchgeführt wird.

13. Verfahren nach Anspruch 12, **dadurch gekennzeichnet, dass** bei dem Messen der Druckdichtigkeit ein Druckgefälle von weniger als 2 bar, bevorzugt von weniger als 1 bar, vorliegt.
